Europäisches Patentamt

European Patent Office

Office européen des brevets

(11) Publication number: **0 407 910 A1**

# EUROPEAN PATENT APPLICATION

(21) Application number: 90112921.3

(22) Date of filing: 06.07.90

(51) Int. Cl.⁵: **B60P 1/38**

(30) Priority: **10.07.89 IT 6757689**

(43) Date of publication of application:
**16.01.91 Bulletin 91/03**

(84) Designated Contracting States:
**AT BE CH DE DK ES FR GB GR IT LI LU NL SE**

(71) Applicant: SPACE S.r.l.
Corso Piemonte, 1
I-10099 San Mauro Torinese(IT)

(72) Inventor: Pellegrino, Luigi
Via Roncola 42
I-10090 Rivalba (Torino)(IT)

(74) Representative: Buzzi, Franco et al
c/o Jacobacci-Casetta & Perani S.p.A. Via
Alfieri, 17 17
I-10121 Torino(IT)

(54) **A retractable system for handling loads by means of endless cable or chain conveyor elements, particularly for trucks.**

(57) A retractable system for handling loads by means of endless cable or chain conveyor elements (F,G) whose active passes bear on a guide (7,9) of a strong, self-lubricating material fixed to the movable part (4) of a support base (1). Inflatable and deflatable pneumatic pocket means (6) are interposed between the fixed part (2) and the movable part (4) of the support base (1) for moving the guide (7,9) between a raised position and a lowered position in which the active passes of the conveyor elements are substantially housed within the vertical bulk of the base (1).

FIG. 1

# A RETRACTABLE SYSTEM FOR HANDLING LOADS BY MEANS OF ENDLESS CABLE OR CHAIN CONVEYOR ELEMENTS, PARTICULARLY FOR TRUCKS

The present invention relates to systems for handling loads by means of endless cable or chain conveyors, particularly for installation in trucks.

Conventional systems of this type known, for example, from U.S.-A-4,082,196 comprise a plurality of cables or chains extending parallel to the length of the load platform of the vehicle with their conveying passes movable in guide grooves in the platform and their return passes housed within the thickness of the platform or beneath it. The cables or chains are driven by means of a motor-driven actuator mounted on the vehicle.

An improved version of these systems, described and illustrated in WO87/01996, provides low-friction sliding guides which are fixed to the load platform of the vehicle and on which the active passes of the cables or chains bear.

In all the known systems described above, the active passes of the cables or chains project permanently from the loading platform in each case so that, during transportation, the loads rest on the active passes rather than on the load platform as would be desirable for reasons of load stability and the reduction of wear in the cables or chains.

The object of the present invention is precisely to avoid the aforesaid problem and this object is achieved by means of a load-handling system of the type defined at the beginning, characterised in that it includes means for supporting the active passes of the endless conveyor elements, comprising a base with a fixed lower part and an upper part which is movable vertically relative to the fixed part between a raised position and a lowered position, inflatable and deflatable pneumatic pocket means interposed between the fixed part and the movable part of the base for moving the movable part between the raised and lowered positions, a guide of strong, self-lubricating material which is fixed to the movable part of the base and with which the active passes of the endless conveyor elements are in sliding contact, and pneumatic means for inflating and deflating the pneumatic pocket means; the arrangement being such that, when the movable part of the base is in its lowered position, the active passes of the conveyor elements are housed substantially within the vertical bulk of the base.

By virtue of this concept, in use, the loads rest on the active passes of the cables or chains only during the handling operations (for example, loading and unloading of a truck in which the system is installed) because, during transportation, they are supported on the bases, that is, they rest on the load platform since the bases are flush with the latter.

The system can be used to particular advantage as a permanent installation in a truck. It can be used to equal advantage, however, in fixed handling installations used for the loading and unloading of trucks or similar applications.

If the endless conveyor elements are constituted by cables, the guide of self-lubricating material conveniently has longitudinal grooves with substantially semicircular cross-sections in which the active passes of the cables rest.

The invention will now be described in detail with reference to the appended drawings, provided purely by way of non-limiting example, in which:

Figure 1 is a schematic cross-section of part of a handling system according to the invention, shown in its operative configuration,

Figure 2 is a view similar to Figure 1 with the system in the rest configuration, and

Figures 3 and 4 are views similar to Figures 1 and 2, relating to a second embodiment of the invention.

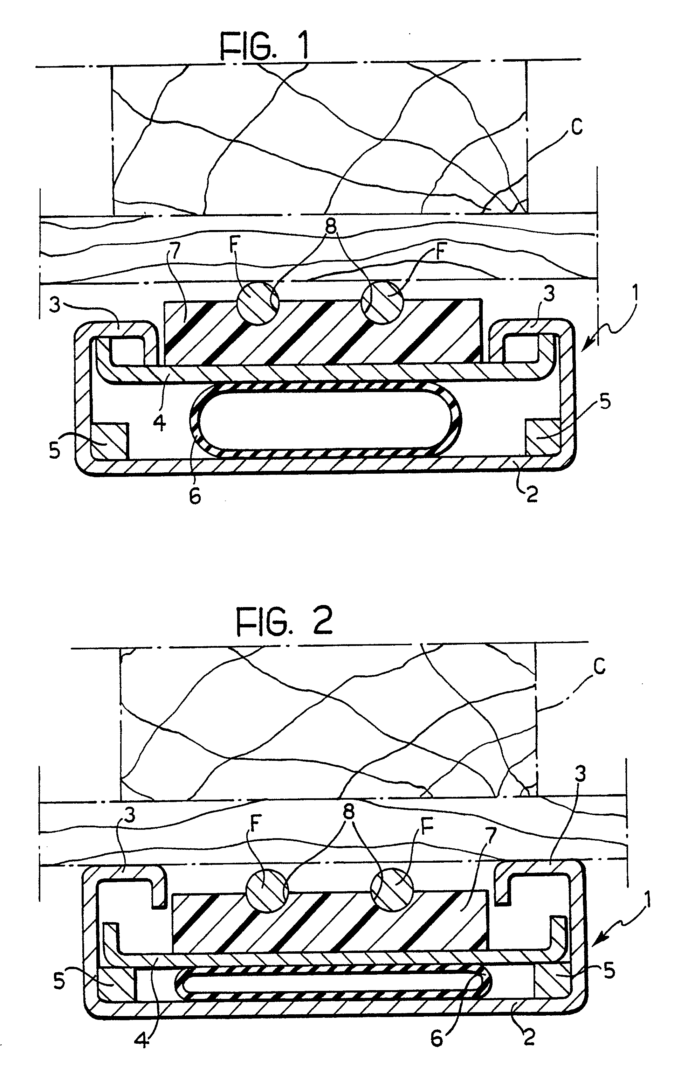

With reference initially to Figures 1 and 2, the active or conveying passes of two conventional, motor-driven cables for handling loads C on a truck or in a fixed installation are indicated F.

The conveying passes F of the cables bear on a support base 1 housed within the thickness of the flatbed of the truck or within the thickness of a fixed platform. The return passes of the two cables are not shown in the drawings: they extend wholly within the thickness of, or even beneath, the flatbed or platform, in known manner.

The base 1 comprises a substantially channel-shaped fixed part 2 with upper edges 3 which are bent horizontally and are normally arranged flush with the upper face of the flatbed or platform. The fixed part 2 extends continuously throughout substantially the entire length of the conveying passes of the cables F.

A movable part 4 of the base 1 and is housed within the fixed part 2 and.is movable vertically relative thereto between the raised position shown in Figure 1 and the lowered position shown in Figure 2. The travel of the movable part 4 is limited at the top by the overturned edges 3 of the fixed part 2 and at the bottom by two lateral supports 5.

An inflatable and deflatable pneumatic pocket 6 is interposed longitudinally between the bottom of the fixed part 2 and the movable part 4 for moving the movable part 4 relative to the fixed part 2. The pocket 6 is connected to a conventional compressed-air supply, not illustrated, which is installed in the truck or forms part of the fixed installation.

A longitudinal guide 7 of strong, self-lubricating material is fixed to the upper face of the movable part 4 and is formed with longitudinal grooves 8 of substantially semicircular cross-section in which the active passes of the cables F rest. The guide 8 may be of self-lubricating plastics material or of other materials with equivalent characteristics.

The system described above operates as follows.

During the handling of loads C, the pneumatic pockets 6 are kept inflated so that the movable part 4 of the guide 2 is situated in the raised position of Figure 1 with the active passes of the cables F projecting above the base 1. The loads C therefore rest solely on the active passes of the cables F which in turn slide along the grooves 8 of the guide 7.

Upon completion of the handling operations (for example, when the truck in which the system is installed has been fully loaded), the pneumatic pocket 6 is connected to the exhaust so that it deflates and lowers the movable part 4 relative to the fixed part 4 of the base 1, as shown in Figure 2. In the fully lowered condition (that is, with the movable part 4 bearing on the lateral supports 5), the active passes F of the cables are housed within the vertical bulk of the base 1 so that the loads C rest on the bent upper edges 3 thereof, that is, on the flatbed of the truck or on the fixed platform since, as stated above, the base 1 is normally installed within its thickness.

This ensures the stable positioning of the loads C and at the same time prevents premature wear of the cables since their active passes F do not have to support the loads C during transportation.

When it is necessary to move the loads C again, it suffices to re-open the communication between the pneumatic pocket 6 and the compressed-air supply so as to re-establish the configuration of Figure 1.

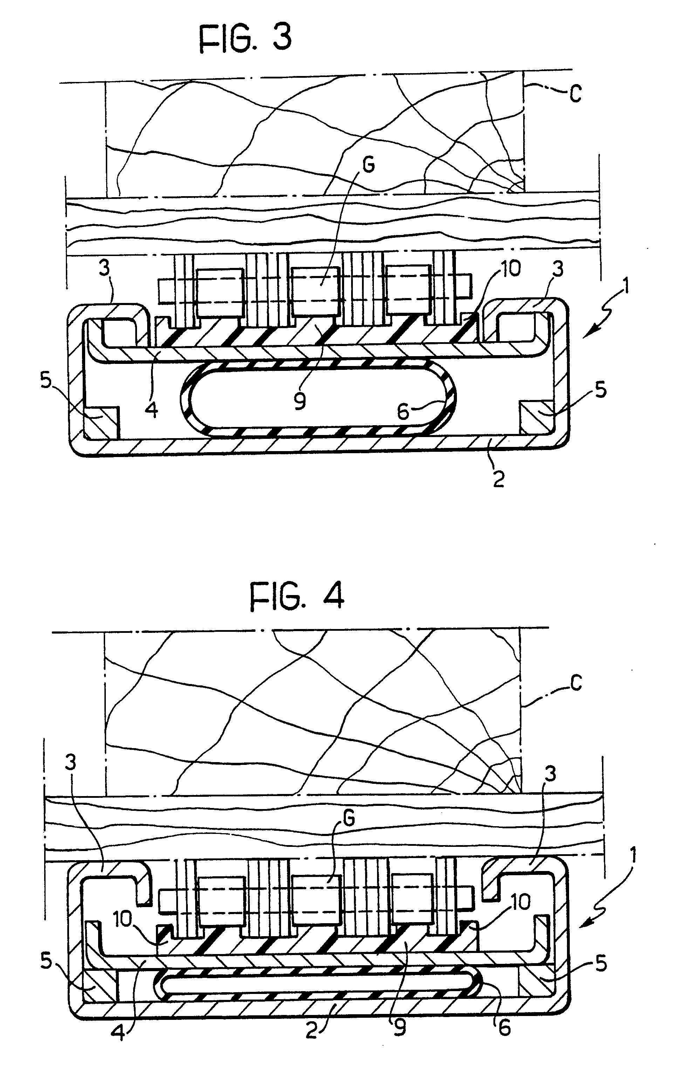

The variant shown in Figures 3 and 4 is generally similar to the embodiment described above and only the differences will be described in detail with the use of the same reference numerals for identical or similar parts. In this variant, the cables F are replaced by motor-driven roller chains whose active passes, indicated G, bear on the movable part 4 of the guide 1 with the interposition of a guide 9 of strong, self-lubricating material. The guide 9 differs from the guide 7 described above solely in that it is thinner (because of the greater thickness of the chains G compared with the cables F) and in that it has longitudinal projections 11 on which the rollers of the chains G bear. The guide 9 may conveniently be provided with lateral shoulders 10 for guiding the active passes of the chains G more securely.

This variant operates in exactly the same way as that described above.

## Claims

1. A system for handling loads by means of endless cable or chain conveyor elements, characterised in that it includes means for supporting the active passes of the endless conveyor elements (F, G), comprising a base (1) with a fixed lower part (2) and an upper part (4) which is movable vertically relative to the fixed part (2) between a raised position and a lowered position, inflatable and deflatable pneumatic pocket means (6) interposed between the fixed part (2) and the movable part (4) of the base (1) for moving the movable part (4) between the raised and lowered positions, a guide (7, 9) of strong, self-lubricating material which is fixed to the mov.ble part (4) of the base (1) and with which the active passes (F, G) of the endless conveyor elements are in sliding contact, and pneumatic means for inflating and deflating the pneumatic pocket means (6); the arrangement being such that, when the movable part (4) of the base (1) is in its lowered position, the active passes (F, G) of the conveyor elements are housed substantially within the vertical bulk of the base (1).

2. A system according to Claim 1, in which the endless conveyor elements are cables, characterised in that the guide (7) of self-lubricating material has longitudinal grooves (8) of substantially semicircular cross-section in its upper part, in which the active passes of the cables (F) rest.

3. A system according to Claim 1, in which the endless conveyor elements are roller chains (G), characterised in that the guide (9) of self-lubricating material has lateral guide shoulders (10) and longitudinal projections (11) for supporting the rollers of the chains (6).

# FIG. 1

# FIG. 2

## FIG. 3

## FIG. 4

# EUROPEAN SEARCH REPORT

Application Number

**EP 90 11 2921**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 223 584  (HYDRAROLL)<br>* column 2, line 13 - column 4, line 32; figures 1-9 * | 1 | B 60 P 1/38 |
| Y,D | WO-A-8 701 996  (SPACE S.P.A.)<br>* page 2, line 15 - page 4, line 7; figures 1-3 * | 1 | |
| A | EP-A-0 002 106  (HYDRAROLL)<br>* page 3, line 28 - page 7, line 28; figures 1-3 * | 1 | |
| A | GB-A-2 152 895  (HYDRAROLL)<br>* abstract; figures 1-3 * | 1 | |

TECHNICAL FIELDS
SEARCHED (Int. Cl.5)

B 60 P

The present search report has been drawn up for all claims

| Place of search | Date of completion of search | Examiner |
|---|---|---|
| The Hague | 23 November 90 | VANNESTE M.A.R. |